# EUROPEAN PATENT SPECIFICATION

(11) **EP 3 005 104 B1**
(45) Date of publication and mention of the grant of the patent: **26.04.2023**
(21) Application number: 14811960.5
(22) Date of filing: 30.05.2014
(51) Int. Cl.: G06F 8/60, G06F 9/445, G06F 8/76

(54) **MANAGING A SUCCESSION OF DEPLOYMENTS OF AN APPLICATION PROGRAMMING INTERFACE (API) SERVER CONFIGURATION IN THE SOFTWARE LIFECYCLE DEVELOPMENT**
VERWALTUNG EINER FOLGE VON VERWENDUNGEN EINER APPLICATION PROGRAMMING INTERFACE (API) SERVERKONFIGURATION IM SOFTWARE-ENTWICKLUNGSLEBENSZYKLUS
GESTION D'UNE SUCCESSION DE DÉPLOIEMENTS D'UNE INTERFACE DE PROGRAMMATION D'APPLICATION (API) CONFIGURATION DE SERVEUR DANS LE CYCLE DE VIE DU DEVELOPPEMENT D'UN LOGICIEL

(30) Priority: 31.05.2013 US 201361829647 P; 03.06.2013 US 201361830508 P
(43) Date of publication of application: 13.04.2016
(73) Proprietor: Vordel Limited, Dublin (IE)
(72) Inventor: COLLINS, Melissa, Phoenix, AZ 85054 (US); WIMS, Mark, Phoenix, AZ 85054 (US); MCKENNA, David, Phoenix, AZ 85054 (US); EDWARDS, Peter, Phoenix, AZ 85054 (US); HALPIN, Jason, Phoenix, AZ 85054 (US)
(74) Representative: Boult Wade Tennant LLP
(86) International application number: PCT/IB2014/002067
(87) International publication number: WO 2015/019183

(56) References cited:
- US-A1- 2005 289 538
- "Next-Generation API Delivery Platform", A Vordel White Paper - How to Use an API Server to Manage, Deliver and Secure APIs, 1 January 2012 (2012-01-01), pages 1-20, XP055163761, Retrieved from the Internet: URL:http://www.cloudcomputingintelligence. com/component/phocadownload/category/1-lat est-white-papers?download=7:api-delivery-p latform [retrieved on 2015-01-21]
- AMERICO SAMPAIO ET AL: "Uni4Cloud: an approach based on open standards for deployment and management of multi-cloud applications", PROCEEDINGS OF THE 2ND INTERNATIONAL WORKSHOP ON SOFTWARE ENGINEERING FOR CLOUD COMPUTING (SECLOUD '11), 22 May 2011 (2011-05-22), pages 15-21, XP055064097, New York, NY, USA DOI: 10.1145/1985500.1985504 ISBN: 978-1-45-030582-2

## Description

### BACKGROUND

### Field of the Invention

The present invention(s) relate(s) generally to interfaces in distributed computational systems and, more particularly, to gateway- and/or proxy-type facilities for brokering, translating, securing and/or managing application programming interfaces (APIs).

### Related Art

Application programming interfaces (APIs) have long been used to specify how software components interact with one another. By defining an API, programmers or system architects may specify the calls, method invocations and/or messages that may be employed by one component to interact with another, typically without exposing the internals of the software, data and collaborations "behind" the API.

With growing numbers and varieties of web and mobile applications deployed each day, and given the increasing importance of a diverse ecosystem cloud-based storage, application and service platforms for enterprise applications, management of the interfaces (the APIs) by which these applications and platforms cooperate is a growing challenge. The sheer combinatorial explosion of applications and services that expose and/or consume APIs presents significant lifecycle management challenges, while requirements for security, availability and scalability demand comprehensive approaches to API deployment.

One approach popularized by Vordel (now a division of Axway, Inc.) is the deployment of an API Server runtime environment in which a diverse and ever evolving set of APIs, as well as the information transactions that traverse such APIs, can be deployed, secured, monitored, subjected to control and governance, etc. Building on offerings such as the Axway API Server, enterprises can effectively deploy and manage the APIs by which mobile client applications interact with enterprise data and services in the cloud or APIs by which business partners exchange data or execute transactions.

The document "Next-Generation API Delivery Platform - How to Use an API Server to Manage, Deliver and Secure APIs", 2012, is a Vordel white paper about an API gateway which supports the API development life cycle. Further, US 2005/289538 A1, discloses a platform to support design, development, test and deployment of software.

As popularity and market penetration of API server techniques increase, improved methods are needed to manage lifecycle aspects of API deployments. In some cases, improvements in the ease and speed of development, testing and production deployments of APIs are desired.

### SUMMARY AND DESCRIPTION

The invention is defined by the appended set of claims.

It has been discovered that a succession of deployments of an API server configuration can be managed using software tools that allow initial definition of API server (e.g., within a development environment) using a predefined, user/enterprise-defined, and/or extensible sets of building blocks (e.g., policy, filter, listener and/or external connection building blocks) for which particular parameters, objects, predicates etc. thereof may be identified as particular to a deployment environment. In this way, a computer readable media encoding of an API server configuration so defined is decomposed into portions that are environment specific and portions that are (or can be viewed) as environment agnostic. On promotion of a given API server configuration from a development environment deployment to a testing or production environment deployment, computer readable media encodings of the development environment configuration are "environmentalized" so as to separate environment neutral aspects of policy, filter, listener and external connection instantiations from environment specific aspects. Once separated (e.g., into an environment neutral policy package and an environment package), the API server configuration can be promoted to successive environments in a lifecycle succession of deployments by specializing the environment package while maintaining configuration control over the policy package.

In some cases, a typical enterprise level customer may have several environments through which an API server configuration may move from development to production. For example, this may include completely separate development, testing, and production domains. A package may be deployed in these environments according to a policy that is developed by a policy developer. The policy developer prepares the configuration for promotion to upstream environments (e.g., testing and production environments). This may involve deciding which settings are environment-specific and may assume expertise in policy development and configuration tools (e.g., Policy Studio).

Each environment may be handled by different personnel. For example, the policy developer may govern the development environment, and API server administrator may govern the testing environment, and an API server operator may govern the production environment. The API server administration and API server operator may not have expertise in policy development and configuration tools. Accordingly, as the configuration is promoted upstream, the API server administrator and API server operator may be unable to adequately enforce the policies in their respective environments.

Additionally, to identify which settings are environment specific and which are environment agnostic, the API server administer or API server operator may need to navigate the server configuration to identify what needs to be changed. This may be time consuming and from the point of view of the upstream user may add complexity to the API server.

According to the invention, a method of managing a succession of deployments of an API server configuration includes defining a first configuration of the API server, preparing a second configuration of the API server and preparing a third configuration of the API server. The first configuration is embodied as a computer readable media encoding of a deployment package that encodes at least policy, listener and external connection components of the defined first configuration together with environment settings particular to operation of the API server in a development environment deployment thereof. The second configuration is embodied as computer readable media encodings of (i) a policy package derived from the first configuration and (ii) a separable environment package particular to a testing environment deployment of the API server. The third configuration is embodied as computer readable media encodings of (i) the derived policy package and (ii) a separable environment package particular to a production environment deployment of the API server. The environment settings for the development environment deployment and the environment packages particular to the testing and production environment deployments of the API server specify, relative to their respective deployment environments, differing external resource locators, cryptographic certificates and user authentication parameters.

In some cases or embodiments, the method further includes promoting (substantially unchanged) the policy, listener and external connection components of the API server from the development environment deployment to the successive testing and production environment deployments thereof, and specializing instances of the API server for the successive testing and production environment deployments by specializing the environment packages particular thereto. In some cases or embodiments, the method further includes specializing plural instances of the API server for respective production environment deployments by specializing the environment packages particular thereto. At least some of the plural API server instances specialized for respective production environment deployments are related as members of a load balance or failover set. The promoted policy, listener and external connection components of the API server are embodied in the successive testing and production environment deployments thereof as part of an environment-agnostic version of the derived policy package. The first configuration is executable in the development environment.

In some cases or embodiments, the method further includes based on execution of the API Server in one or more of the testing and production environments, updating the development environment deployment package and re-deriving the policy package for redeployment in connection with respective environment packages for either or both of the testing and production environment deployments of the API server. The environment settings in the environment package particular to the testing environment deployment replace the environment settings particular to the development environment deployment. Further, the environment settings in the environment package particular to the production environment deployment replace the environment settings particular to the testing environment deployment. The environment settings in the environment package particular to the production environment deployment replace the environment settings particular to the testing environment deployment.

In some cases or embodiments, the development and testing environments are deployed in a common domain. Further, the policy component includes policy rule definitions that at least define partial operation of the API server, and wherein at least some of the policy rule components include environment settings that enforce security, compliance, and operational policies. The listener components establish protocol interaction with respect to a client of the API server, and wherein the listener components include environment settings that accept requests using a protocol that is compatible with the policy component. The protocol includes HTTP and/or JMS. The external connection components establish a connection to a node that stores data that affect operation of the API server. The external connection components include environment settings that are queried to authenticate a client of the API server. The node is a database or an authentication repository.

In some cases or embodiments, responsive to simulated API traffic and external configuration lookup, the first configuration is executed in the development environment. Additionally, responsive to updating the environment settings for the testing environment, the second configuration is executed in the testing environment. Additionally, responsive to updating the environment settings for the production environment, the third configuration is executed in the production environment.

In some cases or embodiments, the method further includes receiving environment-specific input and updating based on the received environment-specific input the separable environment package particular to the testing environment deployment of the API server. The method may also include receiving second environment-specific input and updating based on the received second environment-specific input the separable environment package particular to the production environment deployment of the API server.

In some cases or embodiments, promoting substantially unchanged the policy, listener and external connection components of the API server from the development environment deployment to the successive testing and production environment deployments thereof further includes transferring to a target environment a configuration file including the policy, listener and external connection components of the API server. Transferring to the target environment includes transferring the configuration file using a file transfer protocol.

In some cases or embodiments, promoting substantially unchanged the policy, listener and external connection components of the API server from the development environment deployment to the successive testing and production environment deployments thereof further includes loading a configuration file including the policy, listener and external connection components of the API server to a repository, and retrieving the configuration file from the repository. The configuration file is executable in the development and testing environments.

In some cases or embodiments, promoting substantially unchanged the policy, listener and external connection components of the API server from the development environment deployment to the successive testing and production environment deployments thereof further includes loading the first configuration including the policy, listener and external connection components of the API server to a repository, retrieving the first configuration from the repository, extracting the environment settings from the retrieved first configuration, and encoding the extracted environment settings into the environment package particular to the testing environment deployment of the API server. The promotion includes retrieving the first configuration from the repository, extracting the environment settings from the retrieved first configuration, and encoding the extracted environment settings into the environment package particular to the production environment deployment of the API server.

In some cases or embodiments, the method further includes receiving user selections of policy, listener and external connection components that are environment settings particular to operation of the API server in the development environment deployment and receiving input values for each of the user selections. The input values ensure that the first configuration remains deployable in the development environment deployment, and preparing the second configuration of the API server includes exporting the policy package including the user selections and input values to disk. The method may also include obtaining the cryptographic certificates and the user authentication parameters. Preparing the second configuration of the API server includes exporting the separable environment package including the obtained cryptographic certificates and user authentication parameters to disk.

In some cases or embodiments, the method further includes updating the first configuration of the API server based on the input values, obtaining an updated policy package derived from the updated first configuration of the API server, and updating the second configuration of the API server. Updating the second configuration includes merging the separable environment package particular to the testing environment deployment of the API server with the updated policy package. The method may also include receiving second input values for new environment settings for the updated policy package and updating input values of the new environment settings using the received second input values. Updating the second configuration of the API server includes adding at least one from the group including certificates, keys, users, and user groups. Updating the second configuration of the API server includes removing at least one from the group including certificates, keys, users and user groups. In some cases or embodiments, a schema of the policy package includes access control rules, content filtering, threat protection, quota management, integrity and confidentiality of a request, transformation, auditing, and routing rules.

In some cases or embodiments, a physical computer system is provided to execute the methods recited in this disclosure. In an embodiment, a computer program product encoded in one or more media includes instructions executable on a processor of a first computational system to provide a graphical policy studio in which a policy developer user may perform (i) defining a first configuration of the API server; (ii) execution of a virtualized instance of the first configuration and (iii) export of the computer readable media encoding of the deployment package. The computer program product also includes instructions executable on a processor of a second computational system to provide a configuration studio in which a deploying user may perform (i) preparing a second configuration of the API server, the second configuration embodied as computer readable media encodings of (a) a policy package derived from the first configuration and (b) a separable environment package particular to a testing environment deployment of the API server; or (ii) preparing a third configuration of the API server, the third configuration embodied as computer readable media encodings of (a) the derived policy package and (b) a separable environment package particular to a production environment deployment of the API server. The environment settings for the development environment deployment and the environment packages particular to the testing and production environment deployments of the API server specify, relative to their respective deployment environments, differing external resource locators, cryptographic certificates and user authentication parameters.

In some embodiments in accordance with the present invention(s), a system for managing a succession of deployments of an application programming interface (API) includes a first deployment engine that defines a first configuration of an API server. The first configuration includes a deployment package that encodes at least policy, listener and external connection components of the defined first configuration together with environment settings particular to operation of the API server in a development environment deployment thereof. The system also includes a second deployment engine that prepares a second configuration of the API server. The second configuration includes (i) a policy package derived from the first configuration and (ii) a separable environment package particular to a testing environment deployment of the API server. The system also includes a third deployment engine that prepares a third configuration of the API server. The third configuration includes (i) the derived policy package and (ii) a separable environment package particular to a production environment deployment of the API server. The environment settings for the development environment deployment and the environment packages particular to the testing and production environment deployments of the API server specify, relative to their respective deployment environments, differing external resource locators, cryptographic certificates and user authentication parameters.

In some cases or embodiments, the system further includes a promotion engine that promotes substantially unchanged the policy, listener and external connection components of the API server from the development environment deployment to the successive testing and production environment deployments thereof and that specializes instances of the API server for the successive testing and production environment deployments by specializing the environment packages particular thereto. The promoted policy, listener and external connection components of the API server are embodied in the successive testing and production environment deployments thereof as part of an environment-agnostic version of the derived policy package.

While inventive aspects of the present inventions are detailed in the description and claims that follow, exemplary design choices and concrete realizations thereof will be appreciated by persons of skill in the art having access to the present disclosure in view of particulars disclosed in the follow reference documents:
- Axway API Server, Concepts Guide (Version 7.2.0),
- Axway API Server, Deployment and Promotion Guide (Version 7.2.0),
- Axway API Management Solution Pack, API Management Guide (Version 7.2.0), and
- Axway API Server Developer Guide (Version 7.2.0), and
- Environmentalization Examples.

### BRIEF DESCRIPTION OF THE DRAWINGS

The present invention may be better understood, and its numerous objects, features, and advantages made apparent to those skilled in the art by referencing the accompanying drawings.
FIG. 1 is an illustration of two API groups in development domains being promoted to a test domain and further promoted to a production domain, according to an embodiment.
FIG. 2 is a screenshot of a graphical configuration tool used to define the server configuration, according to an embodiment.
FIG. 3 is an illustration of a deployment package including a policy package and environment package, according to an embodiment.
FIG. 4 is a screenshot of a graphical configuration tool used to tag fields of the server configuration, according to an embodiment.
FIG. 5 is a simplified flowchart illustrating a method of managing a succession of deployments of an API server configuration, according to an embodiment.
FIG. 6 is a block diagram of a computer system suitable for implementing one or more embodiments of the present disclosure.

The use of the same reference symbols in different drawings indicates similar or identical items.

### DETAILED DESCRIPTION

This disclosure provides techniques to deploy and promote API server configurations for managing a succession of deployments of an API server configuration.

A user may have several environments through which the server configuration will move from development to production. This may include completely separate development, testing, and production domains. Promotion refers to the act of moving the server configuration from one environment to another environment, and configuring environment-specific values so that the configuration can be deployed in a particular environment.

Deployment may refer to deploying the configuration to the API server group in a local domain. A domain may be a distinct administrative entity for managing groups of API servers. In an example, a production environment is implemented as a distinct production domain to which only production operations staff has access.

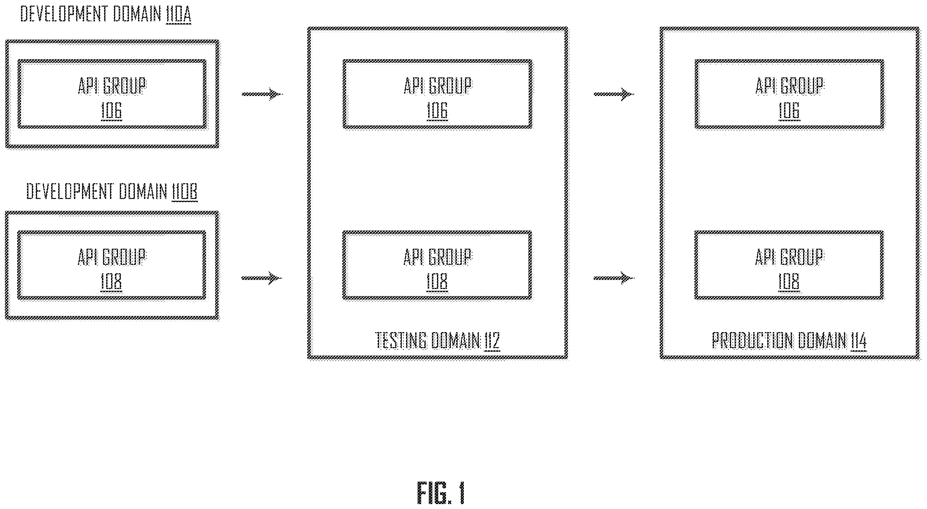

FIG. 1 is an illustration of two API groups in development domains 110A and 110B being promoted to a test domain 112 and further promoted to a production domain 114, according to an embodiment.

In FIG. 1, API group 106 is in development domain 110A and API group 108 is in development domain 110B. Each environment may be implemented as a distinct API server domain. In an example, developers work in their own development environments, and then promote their API server configuration to a central testing team that performs testing in a single testing environment. When testing is complete, the testing team promotes the API server configuration to the production operations team for deployment in the production environment. Development, testing, and production operations teams have access to their respective environments. Although the disclosure describes three different environments (development, testing, and production), fewer than or more than three environments are within the scope of this disclosure. Further, an embodiment may have two or more of any particular environment. For example, an embodiment may include a development environment and two testing environments.

The API server may be flexible and work with any architecture. In an example, the API server does not mandate a specific environment-to-domain configuration. The development and testing teams may work in the same environment with common access to all API server configurations. In this case, a single domain may exist for the development and testing API server groups. The server configuration is deployed to a group of API servers, and each domain includes the appropriate API server groups to run the configurations.

The server configuration may be promoted between environments. In an example, the policy developer prepares the configuration for promotion to upstream environments (e.g., testing and production environments). This may involve deciding which settings are environment-specific and assumes expertise in policy development and configuration tools (e.g., Policy Studio). A policy developer may define a configuration of the API server by using, for example, a configuration tool. The server configuration may include different configuration types, such as policy, listener, external connection, certificate, user, environment setting, and packet properties components. It should be understood that other configuration types are within the scope of this disclosure.

The upstream user (e.g., API server administrator) takes the configuration prepared by the policy developer, creates the environment-specific configuration, and deploys it. The upstream user may use tools, such as Configuration Studio, that do not assume that the upstream user has expertise in policy development and configuration.

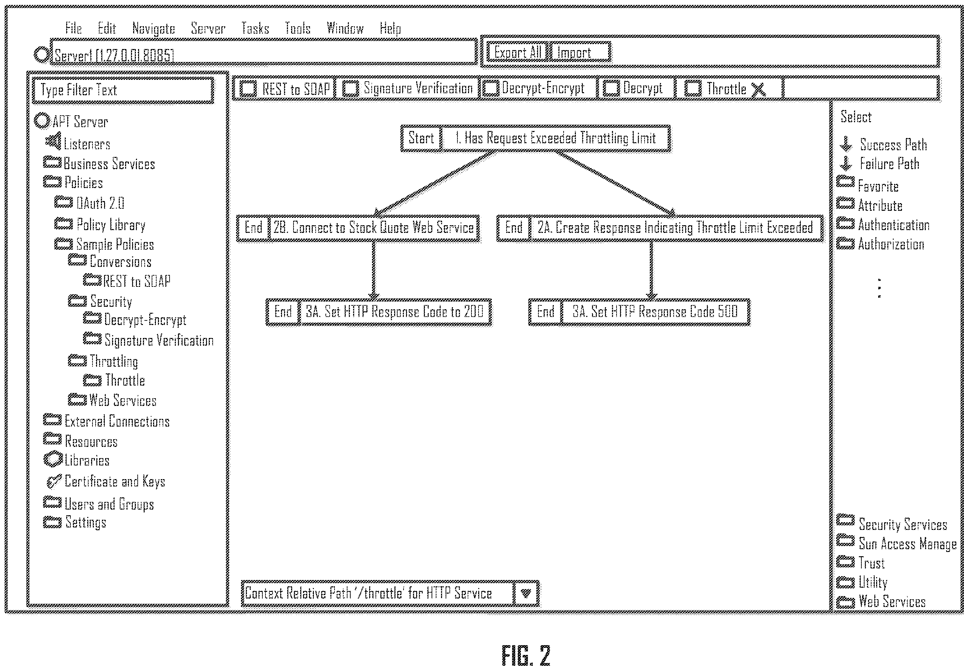

FIG. 2 is a screenshot of a graphical configuration tool used to define the server configuration, according to an embodiment. Although the configuration tool is described as being a graphical user interface, other user interfaces (e.g., shell) are within the scope of this disclosure.

In FIG. 2, the graphical configuration tool used to define the server configuration may enable the policy developer to virtualize APIs and develop policies. Policies may enforce security, compliance, and/or operational requirements. The graphical configuration tool may include various features, such as a flow-chart style visualization for easy development and maintenance, a graphical drag-n-drop user interface that enables the policy developer to drag filters (processing rules) on to the policy canvas and configure them, and an extensive library of filters to build powerful policies.

In an embodiment, the server configuration is embodied as a computer readable media encoding of a deployment package that encodes at least policy, listener and external connection components of the defined configuration together with environment settings particular to operation of the API server in a development environment deployment thereof.

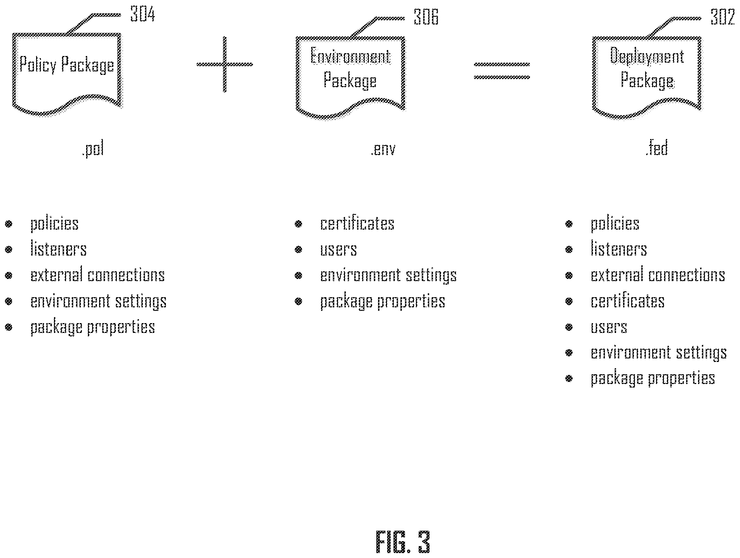

FIG. 3 is an illustration of a deployment package 302 including a policy package 304 and environment package 306, according to an embodiment.

In FIG. 3, environment package 306 includes certificates and users along with environment settings and package properties. It should be understood that environment package 306 may include fewer or more settings and/or properties. Environment package 306 has a .env extension.

Policy package 304 includes policy, listener and external connection components along with environment settings and package properties. It should be understood that policy package 304 may include fewer or more settings and/or properties. Policy package 304 has a .pol extension. The policy component may include policy rule definitions that at least define partial operation of the API server. Additionally, at least some of the policy rule components may include environment settings that enforce security, compliance, and operational policies. The listener components may establish protocol interaction with respect to a client of the API server. Additionally, the listener components may include environment settings that accept requests using a protocol that is compatible with the policy component. In an example, the protocol includes HTTP and/or JMS. The external connection components may establish a connection to a node that stores data that affect operation of the API server. Additionally, the external connection components may include environment settings that are queried to authenticate a client of the API server. In an example, the node is a database or an authentication repository.

The graphical configuration tool may receive user selections of policy, listener and external connection components that are environment settings particular to operation of the API server in the development environment deployment. The graphical configuration tool may receive input values for each of the user selections. The input values may ensure that the configuration for the development deployment remains deployable in the development environment deployment.

Policy package 304 may include details of APIs virtualized by the API server. The details may include a protocol of the source message (e.g., HTTP, HTTPS, JMS, FTP, etc.), access control rules (e.g., authentication and authorization), content filtering, threat protection, quota management, integrity and confidentially of the request, transformation, auditing, and routing rules.

Environment package 306 may include environment settings and environment-agnostic settings. The graphical configuration tool may guide the policy developer to decompose the environment settings and/or environment agnostic settings and accept input from the policy developer accordingly. For example, the graphical configuration tool may include a reminder to the policy developer to do so.

The policy developer may tag fields as environment settings. The development environment deployment includes any field tagged as an environment setting by the policy developer. A field that is environmentalized is tagged as an environment setting. Tagged fields may include connection details, policy flow decisions (e.g., if in production that call full audit policy), certificate to be used for SSL, integrity checking and message level encryption, where to route requests, and where to authenticate and/or authorize requests and/or users.

One or more fields of the server configuration may be tagged as an environment setting and/or as an environment agnostic setting. In an embodiment, a field is either flagged for environmentalization or is not flagged for environmentalization. In an example, the graphical configuration tool enables a policy developer to flag one or more fields of the server configuration as an environment setting that is specific to the development environment deployment. In such an example, a pointer to the field that is tagged as an environment setting is put into policy package 304 and the development environment specific value for the field is put into environment package 306. The value for the field typically does not flow to the upstream environment, but may flow to the upstream environment in other examples. The testing and production environments may have policy package 304 as an input (e.g., during a first cycle promotion) and have the information from policy package 304 to determine which fields are required.

In another example, the graphical configuration tool may enable a policy developer to flag one or more fields of the server configuration as an environment setting that is not specific to the development environment deployment. In an embodiment, if the policy developer is removing a field that was previously tagged as an environment setting, the pointer to the field that was previously tagged as an environment setting is removed from policy package 304 and any associated environment specific value is removed from environment package 306.

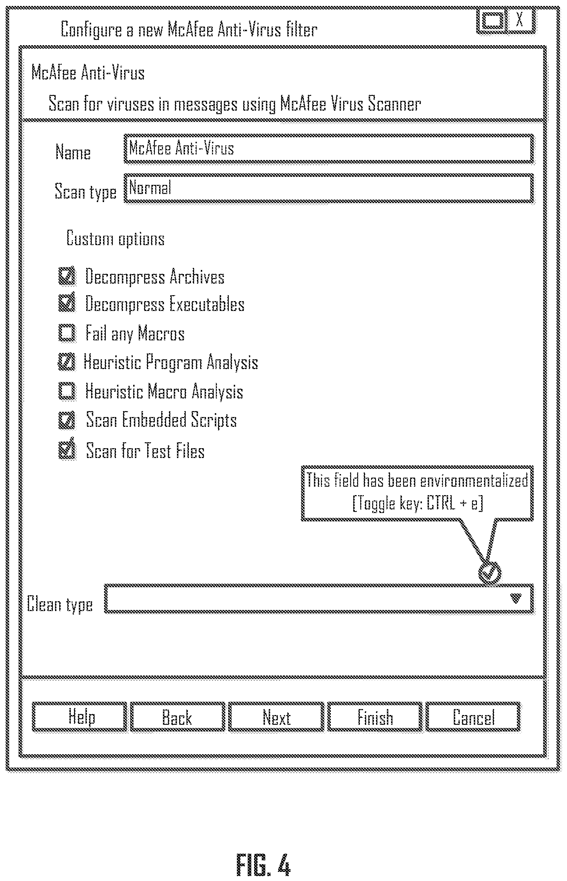

FIG. 4 is a screenshot of a graphical configuration tool used to tag fields of the server configuration, according to an embodiment. In FIG. 4, an antivirus scan type and clean type are environmentalized.

After receiving the appropriate input values, the graphical configuration tool may create policy package 304 and environment package 306. In an embodiment, the server configuration is stored in a file (e.g., XML file). When the policy developer tags a field of the server configuration as an environment setting or as an environment agnostic setting, the file may be manipulated accordingly.

The server configuration may be pushed to the API server and executed in the development environment. The policy developer may continue to develop and change the APIs in the development environment.

When the policy developer is satisfied with the configuration for the development environment, the policy developer may decide to promote the server configuration from the development environment to another environment (e.g., testing or production environments). The policy developer may hand off the configuration to an upstream user (e.g., API server administrator or an API server operator). Rather than have the upstream user find the environment settings particular to operation of the API server in the development environment deployment, the upstream user may use an upstream configuration tool that enables the upstream user to easily find these settings and provide values for them. This may save time for upstream users.

In an embodiment, a configuration of the API server for the testing environment deployment is prepared. The configuration of the API server for the testing environment deployment may be embodied as computer readable media encodings of (i) a policy package derived from the configuration for the development environment and (ii) a separable environment package particular to a testing environment deployment of the API server. The promoted policy, listener and external connection components of the API server may be embodied in successive deployments (e.g., successive testing and production environment deployments) thereof as part of an environment-agnostic version of the derived policy package. In an embodiment, the policy package becomes a read-only package that is not alterable by the upstream user. This may ensure that the policy package does not change and is promoted as is upstream.

The upstream configuration tool may assist in the promotion of the server configuration from the development environment to the testing environment. In an example, the configuration tool produces environment package 306 and another application (e.g., Web based application) deploys the artifacts to the API server. In another example, the policy package may be imported into the upstream configuration tool that pushes the configuration for the upstream environment to the API server for execution.

The promotion of the server configuration may include promoting substantially unchanged the policy, listener and external connection components of the API server from the development environment deployment to the successive testing and production environment deployments thereof. This may provide an advantage to the upstream user because it may be unnecessary for the upstream user to alter the fields in the policy package that are environment agnostic settings or to sift through these settings to find the settings that are environment specific to change them. The fields that are environment agnostic may be static between environments and left unchanged. To guide the user to enter the environment settings needed to execute the policy package and the separable environment package, the upstream configuration tool may highlight the environment settings such that the user knows what information is needed to execute the upstream deployment package in the upstream environment.

The upstream user of the testing environment may enter values for the highlighted environment settings for the testing environment. The upstream configuration tool may receive the environment-specific input and update based on the received environment-specific input the separable environment package particular to the testing environment deployment of the API server. The upstream configuration tool may generate the separate environment package for the testing environment. The environment settings in the environment package particular to the testing environment deployment replace the environment settings particular to the development environment deployment. In an embodiment, the values in the ".env" files of environment package 306 do not move from an environment to another environment in order to be replaced. For example, during a first cycle promotion, values in the ".env" files may be blank and an administrator (e.g., test or production administrator) fills in the blank values to produce a deployable product.

The configuration for the testing environment is executable in the testing environment, for example, responsive to the development environment settings for the development environment being updated with the testing environment settings and pushed to the API server.

From the testing environment, the server configuration may be promoted to the production environment. In an example, a configuration of the API server is prepared for the production environment. In an example, the configuration for the production environment is embodied as computer readable media encodings of (i) the derived policy package and (ii) a separable environment package particular to a production environment deployment of the API server.

In an example, the upstream user of the production environment may use the upstream configuration tool to enter values for the environment settings for the production environment. The upstream configuration tool may highlight these environment settings to make them more easily identifiable to the upstream user. The upstream configuration tool receives the environment-specific input and update based on the received environment-specific input the separable environment package particular to the production environment deployment of the API server. The upstream configuration tool generates the separate environment package for the production environment. The environment settings in the environment package particular to the production environment deployment replace the environment settings particular to the testing environment deployment. The server configuration for the production environment is executable in the production environment, for example, responsive to the testing environment settings for the testing environment being updated with the production environment settings and pushed to the API server.

The server configuration may be exported to the upstream configuration tool by, for example, transferring to the target environment a configuration file including the policy, listener and external connection components of the API server. The configuration file may be transferred using a file transfer protocol (e.g., FTP (File Transfer Protocol)).

The different environments may or may not be connected via a network. In an example, the testing environment may not have network connectivity to obtain the deployment package via a network. If the upstream environment does not have network connectivity. In another example, promoting the server configuration includes loading a configuration file including the policy, listener and external connection components of the API server to a repository, and retrieving the configuration file from the repository. The configuration file may be executable in the development and testing environments.

Preparing the configuration for the testing environment of the API server may include exporting the policy package including the user selections and input values to disk. Additionally, preparing the configuration for the testing environment of the API server may include exporting the separable environment package including the cryptographic certificates and user authentication parameters to disk.

In another example, promoting the server configuration includes loading the configuration for the development environment including the policy, listener and external connection components of the API server to a repository, retrieving the configuration for the development environment from the repository, extracting the environment settings for the development environment from the retrieved configuration, and encoding the extracted environment settings into the environment package particular to the testing environment deployment of the API server. The configuration for the development environment may be retrieved from the repository and the environment settings extracted from the retrieved configuration. The extracted environment settings may be encoded into the environment package particular to the production environment deployment of the API server.

Further, the environment settings for the development environment deployment and the environment packages particular to the testing and production environment deployments of the API server may specify, relative to their respective deployment environments, differing external resource locators, cryptographic certificates and user authentication parameters. The cryptographic certificates and the user authentication parameters may be obtained from the appropriate package.

Further, specializing the environment packages particular thereto may include specializing instances of the API server for the successive testing and production environment deployments. Specializing the environment packages particular thereto may also include specializing plural instances of the API server for respective production environment deployments. At least some of the plural API server instances specialized for respective production environment deployments may be related as members of a load balance or failover set.

Based on execution of the API Server in one or more of the testing and production environments, the development environment deployment package may be updated and the policy package for redeployment in connection with respective environment packages for either or both of the testing and production environment deployments of the API server may be re-derived.

When the server configuration of the API server has already been promoted, the user may decide to change fields in, for example, the policy package. To do so, the user may use the configuration tool to change settings in the development environment. To promote the updated configuration for the development environment, the upstream user may use an upstream configuration tool that accepts input from the user for environment settings for the upstream environment. Responsive to the user's input, the configuration tool may update the configuration of the API server for the development environment based on the input values.

The upstream configuration tool obtains the updated policy package derived from the updated configuration of the API server for the development environment and incorporates the updated policy package particular to the upstream environment. In an example, the upstream environment is the testing environment, and the server configuration is being promoted from the development environment to the testing environment. The upstream configuration tool may update the configuration of the API server for the testing environment by, for example, merging the separable environment package particular to the testing environment deployment of the API server with the updated policy package. The upstream configuration tool may prompt the user to enter input values for the environment settings for the updated policy package and the environment settings may be updated using the user's input values.

In another example, the upstream environment is the production environment and the server configuration is being promoted from the testing environment to the production environment. The upstream configuration tool may update the configuration of the API server for the production environment by, for example, merging the separable environment package particular to the production environment deployment of the API server with the updated policy package. The upstream configuration tool may prompt the user to enter input values for the environment settings for the updated policy package and the environment settings may be updated using the user's input values.

Updating the configuration of the API server for the testing environment may include adding certificates, keys, users, and/or user groups. Updating the configuration of the API server for the testing environment may include removing certificates, keys, users, and/or user groups.

The development, testing, and production environments may be the same or different. In an example, the production environment deployment is deployed in physical hardware and the development environment deployment and/or testing environment deployment is executed in a virtual environment.

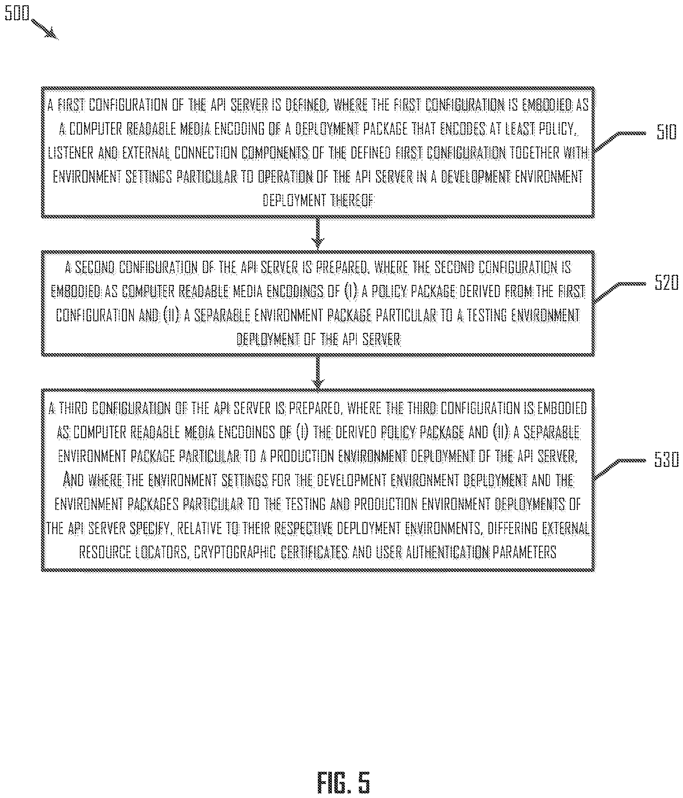

FIG. 5 is a simplified flowchart illustrating a method 500 of managing a succession of deployments of an application programming interface (API) server configuration, according to an embodiment. Method 500 is not meant to be limiting and may be used in other applications.

Method 500 includes steps 510-530. In a step 510, a first configuration of the API server is defined, where the first configuration is embodied as a computer readable media encoding of a deployment package that encodes at least policy, listener and external connection components of the defined first configuration together with environment settings particular to operation of the API server in a development environment deployment thereof. In a step 520, a second configuration of the API server is prepared, where the second configuration is embodied as computer readable media encodings of (i) a policy package derived from the first configuration and (ii) a separable environment package particular to a testing environment deployment of the API server. In a step 530, a third configuration of the API server is prepared, where the third configuration is embodied as computer readable media encodings of (i) the derived policy package and (ii) a separable environment package particular to a production environment deployment of the API server, and where the environment settings for the development environment deployment and the environment packages particular to the testing and production environment deployments of the API server specify, relative to their respective deployment environments, differing external resource locators, cryptographic certificates and user authentication parameters.

It is also understood that additional method steps may be performed before, during, or after steps 510-530 discussed above. It is also understood that one or more of the steps of method 500 described herein may be omitted, combined, or performed in a different sequence as desired.

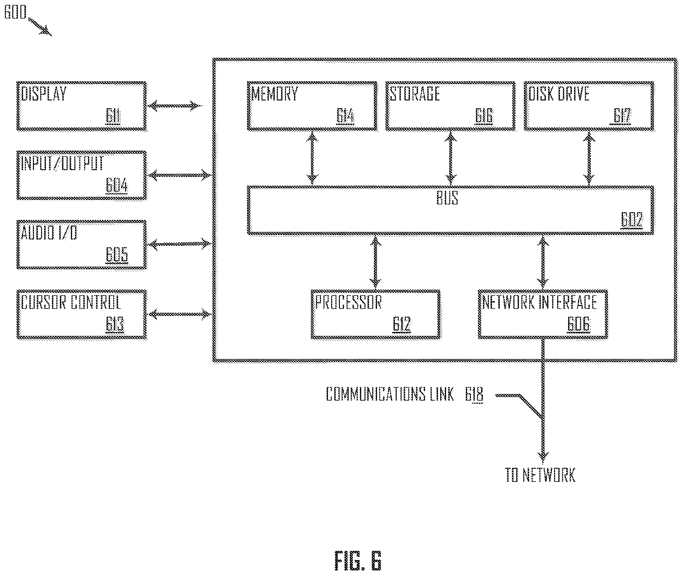

FIG. 6 is a block diagram of a computer system 600 suitable for implementing one or more embodiments of the present disclosure. In various implementations, the configuration may be executed on one or more processors of computer system 600. The API server that provides an environment in which to execute the configuration may include one or more processors of a computer system (e.g., computer system 600). The computer system may additionally include one or more storage devices each selected from a group consisting of floppy disk, flexible disk, hard disk, magnetic tape, any other magnetic medium, CD-ROM, any other optical medium, RAM, PROM, EPROM, FLASH-EPROM, any other memory chip or cartridge, and/or any other medium from which a processor or computer is adapted to read. The one or more storage devices may include stored information that may be made available to one or more computing devices and/or computer programs (e.g., clients) coupled to the client or server using a computer network (not shown). The computer network may be any type of network including a LAN, a WAN, an intranet, the Internet, a cloud, and/or any combination of networks thereof that is capable of interconnecting computing devices and/or computer programs in the system.

Computer system 600 includes a bus 602 or other communication mechanism for communicating information data, signals, and information between various components of computer system 600. Components include an input/output (I/O) component 604 that processes a user action, such as selecting keys from a keypad/keyboard, selecting one or more buttons or links, etc., and sends a corresponding signal to bus 602. I/O component 604 may also include an output component such as a display 611, and an input control such as a cursor control 613 (such as a keyboard, keypad, mouse, etc.). An optional audio input/output component 605 may also be included to allow a user to use voice for inputting information by converting audio signals into information signals. Audio I/O component 605 may allow the user to hear audio. A transceiver or network interface 606 transmits and receives signals between computer system 600 and other devices via a communication link 618 to a network. In an embodiment, the transmission is wireless, although other transmission mediums and methods may also be suitable. A processor 612, which may be a micro-controller, digital signal processor (DSP), or other processing component, processes these various signals, such as for display on computer system 600 or transmission to other devices via communication link 618. Processor 612 may also control transmission of information, such as cookies or IP addresses, to other devices.

Components of computer system 600 also include a system memory component 614 (e.g., RAM), a static storage component 616 (e.g., ROM), and/or a disk drive 617. Computer system 600 performs specific operations by processor 612 and other components by executing one or more sequences of instructions contained in system memory component 614. Logic may be encoded in a computer readable medium, which may refer to any medium that participates in providing instructions to processor 612 for execution. Such a medium may take many forms, including but not limited to, non-volatile media, volatile media, and transmission media. In various implementations, non-volatile media includes optical, or magnetic disks, or solid-state drives, volatile media includes dynamic memory, such as system memory component 614, and transmission media includes coaxial cables, copper wire, and fiber optics, including wires that include bus 602. In an embodiment, the logic is encoded in non-transitory computer readable medium. In an example, transmission media may take the form of acoustic or light waves, such as those generated during radio wave, optical, and infrared data communications.

Some common forms of computer readable media include, for example, floppy disk, flexible disk, hard disk, magnetic tape, any other magnetic medium, CD-ROM, any other optical medium, punch cards, paper tape, any other physical medium with patterns of holes, RAM, PROM, EEPROM, FLASH-EEPROM, any other memory chip or cartridge, or any other medium from which a computer is adapted to read.

In various embodiments of the present disclosure, execution of instruction sequences to practice the present disclosure may be performed by computer system 600. In various other embodiments of the present disclosure, a plurality of computer systems 600 coupled by communication link 618 to the network (e.g., such as a LAN, WLAN, PTSN, and/or various other wired or wireless networks, including telecommunications, mobile, and cellular phone networks) may perform instruction sequences to practice the present disclosure in coordination with one another.

Where applicable, various embodiments provided by the present disclosure may be implemented using hardware, software, or combinations of hardware and software. Also where applicable, the various hardware components and/or software components set forth herein may be combined into composite components including software, hardware, and/or both without departing from the spirit of the present disclosure. Where applicable, the various hardware components and/or software components set forth herein may be separated into sub-components including software, hardware, or both without departing from the spirit of the present disclosure. In addition, where applicable, it is contemplated that software components may be implemented as hardware components, and vice-versa.

Application software in accordance with the present disclosure may be stored on one or more computer readable mediums. It is also contemplated that the application software identified herein may be implemented using one or more general purpose or specific purpose computers and/or computer systems, networked and/or otherwise. Where applicable, the ordering of various steps described herein may be changed, combined into composite steps, and/or separated into sub-steps to provide features described herein.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Changes may be made in form and detail without departing from the scope of the present disclosure. Thus, the present disclosure is limited only by the claims.

## Claims

1. A computer-implemented method of managing a succession of deployments of an application programming interface, API, server configuration, the method comprising:
defining (510) a first configuration of the API server, the first configuration embodied as a computer readable media encoding of a deployment package that encodes at least policy, filter, listener and external connection components of the defined first configuration together with environment settings particular to operation of the API server in a development environment deployment thereof;
preparing (520) a second configuration of the API server by decomposing the first configuration into portions that are environment specific and portions that are environment agnostic such that the first configuration is environmentalized when being promoted to a testing or production environment, so as to separate environment neutral aspects of policy, filter, listener and external connection components from environment specific aspects, the second configuration embodied as computer readable media encodings of (i) a policy package derived from the environment neutral aspects of the first configuration and (ii) a separable environment package particular to a testing environment deployment of the API server;
preparing (530) a third configuration of the API server, the third configuration embodied as computer readable media encodings of (i) the derived policy package and (ii) a separable environment package particular to a production environment deployment of the API server; and
deploying at least one of the testing environment and the production environment, wherein the environment settings for the development environment deployment and the environment packages particular to the testing and production environment deployments of the API server specify, relative to their respective deployment environments, differing external resource locators, cryptographic certificates and user authentication parameters.

2. The method recited in claim 1, further comprising:
promoting unchanged at least one value associated with the policy, listener and external connection components of the API server from the development environment deployment to the successive testing and production environment deployments thereof; and
specializing instances of the API server for the successive testing and production environment deployments by specializing the environment packages particular thereto.

3. The method recited in claim 1, wherein the environment settings in the environment package particular to the testing environment deployment replace the environment settings particular to the development environment deployment, and wherein the environment settings in the environment package particular to the production environment deployment replace the environment settings particular to the testing environment deployment.

4. The method recited in claim 1, wherein the development and testing environments are deployed in a common domain.

5. The method recited in claim 1, wherein the external connection components establish a connection to a node that stores data that affect operation of the API server, and wherein the external connection components include environment settings that are queried to authenticate a client of the API server.

6. The method recited in claim 1, further comprising:
receiving environment-specific input; and
updating based on the received environment-specific input the separable environment package particular to the testing environment deployment of the API server.

7. The method recited in claim 6, further comprising:
receiving second environment-specific input; and
updating based on the received second environment-specific input the separable environment package particular to the production environment deployment of the API server.

8. The method recited in claim 1, further comprising:
receiving user selections of policy, listener and external connection components that are environment settings particular to operation of the API server in the development environment deployment; and
receiving input values for each of the user selections, wherein the input values ensure that the first configuration remains deployable in the development environment deployment,
wherein the preparing a second configuration of the API server includes exporting the policy package including the user selections and input values to disk.

9. The method recited in claim 8, further comprising:
obtaining the cryptographic certificates and the user authentication parameters, wherein the preparing a second configuration of the API server includes exporting the separable environment package including the obtained cryptographic certificates and user authentication parameters to disk.

10. The method recited in claim 8, further comprising:
updating the first configuration of the API server based on the input values;
obtaining an updated policy package derived from the updated first configuration of the API server;
updating the second configuration of the API server, wherein the updating the second configuration includes merging the separable environment package particular to the testing environment deployment of the API server with the updated policy package;
receiving second input values for new environment settings for the updated policy package; and
updating input values of the new environment settings using the received second input values.

11. The method recited in claim 10, wherein the updating the second configuration of the API server includes adding or removing at least one from the group including certificates, keys, users, and user groups.

12. A computer program product encoded in one or more media, the computer program product including:
instructions executable on a processor of a first computational system to provide a graphical policy studio in which a policy developer user may perform (i) the defining step (510) of the method recited in claim 1, together with (ii) execution of a virtualized instance of the first configuration and (iii) export of the computer readable media encoding of the deployment package;
instructions executable on a processor of a second computational system to provide a configuration studio in which a deploying user may perform (i) the preparing steps (520, 530) of the method recited in claim 1, relative to either or both of the second and third configurations of the API server; and
instructions executable on a processor of a third computational system to perform the deploying step of the method recited in claim 1.

13. A system for managing a succession of deployments of an application programming interface, API, the system comprising:
a first deployment engine that defines (510) a first configuration of an API server, wherein the first configuration includes a deployment package that encodes at least policy, filter, listener and external connection components of the defined first configuration together with environment settings particular to operation of the API server in a development environment deployment thereof;
a second deployment engine that prepares (520) a second configuration of the API server by decomposing the first configuration into portions that are environment specific and portions that are environment agnostic such that the first configuration is environmentalized when being promoted to a testing or production environment, so as to separate environment neutral aspects of policy, filter, listener and external connection components from environment specific aspects, wherein the second configuration includes (i) a policy package derived from the environmental neutral aspects of the first configuration and (ii) a separable environment package particular to a testing environment deployment of the API server; and
a third deployment engine that prepares (530) a third configuration of the API server, wherein the third configuration includes (i) the derived policy package and (ii) a separable environment package particular to a production environment deployment of the API server,
a fourth deployment engine that deploys at least one of the testing environment and the production environment, wherein the environment settings for the development environment deployment and the environment packages particular to the testing and production environment deployments of the API server specify, relative to their respective deployment environments, differing external resource locators, cryptographic certificates and user authentication parameters.

14. The system of claim 13, further comprising:
a promotion engine that promotes unchanged the policy, listener and external connection components of the API server from the development environment deployment to the successive testing and production environment deployments thereof and that specializes instances of the API server for the successive testing and production environment deployments by specializing the environment packages particular thereto.

15. The system of claim 13, wherein the promoted policy, listener and external connection components of the API server are embodied in the successive testing and production environment deployments thereof as part of an environment-agnostic version of the derived policy package.

## Patentansprüche

1. Computerimplementiertes Verfahren zum Verwalten einer Folge von Verwendungen einer Anwendungsprogrammierschnittstelle-, API, Serverkonfiguration, wobei das Verfahren umfasst:
Definieren (510) einer ersten Konfiguration des API-Servers, wobei die erste Konfiguration als eine Computerlesbares-Medium-Codierung eines Verwendungspakets verkörpert ist, welches wenigstens Komponenten für Richtlinien, Filter, Listener und externe Verbindungen der definierten ersten Konfiguration zusammen mit Umgebungseinstellungen, insbesondere für einen Betrieb des API-Servers bei einer Entwicklungsumgebungsverwendung davon, codiert;
Vorbereiten (520) einer zweiten Konfiguration des API-Servers durch Zerlegen der ersten Konfiguration in Abschnitte, welche umgebungsspezifisch sind, und Abschnitte, welche umgebungsunabhängig sind, so dass die erste Konfiguration an die Umgebung angepasst ist, wenn sie in einer Test- oder Produktionsumgebung vorangetrieben wird, um umgebungsneutrale Aspekte von Komponenten für Richtlinien, Filter, Listener und externe Verbindungen von umgebungsspezifischen Aspekten zu trennen, wobei die zweite Konfiguration als Computerlesbares-Medium-Codierungen (i) eines von den umgebungsneutralen Aspekten der ersten Konfiguration abgeleiteten Richtlinienpakets und (ii) eines trennbaren Umgebungspakets, insbesondere für eine Testumgebungsverwendung des API-Servers, verkörpert ist;
Vorbereiten (530) einer dritten Konfiguration des API-Servers, wobei die dritte Konfiguration als Computerlesbares-Medium-Codierungen (i) des abgeleiteten Richtlinienpakets und (ii) eines trennbaren Umgebungspakets, insbesondere für eine Produktionsumgebungsverwendung des API-Servers, verkörpert ist; und
Verwenden wenigstens einer der Testumgebung und der Produktionsumgebung, wobei die Umgebungseinstellungen für die Entwicklungsumgebungsverwendung und die Umgebungspakete, insbesondere für die Test- und Produktionsumgebungsverwendungen des API-Servers, in Bezug auf ihre jeweiligen Verwendungsumgebungen unterschiedliche externe Resource Locators, kryptographische Zertifikate und Benutzerauthentifizierungsparameter spezifizieren.

2. Verfahren nach Anspruch 1, ferner umfassend:
Vorantreiben unverändert wenigstens eines Werts, welcher den Komponenten für Richtlinien, Listener und externe Verbindungen des API-Servers zugeordnet ist, von der Entwicklungsumgebungsverwendung zu den sukzessiven Test- und Produktionsumgebungsverwendungen davon; und
Spezialisieren von Instanzen des API-Servers für die sukzessiven Test- und Produktionsumgebungsverwendungen durch Spezialisieren der Umgebungspakete, insbesondere darauf.

3. Verfahren nach Anspruch 1, wobei die Umgebungseinstellungen in dem Umgebungspaket, insbesondere für die Testumgebungsverwendung, die Umgebungseinstellungen, insbesondere für die Entwicklungsumgebungsverwendung, ersetzen und wobei die Umgebungseinstellungen in dem Umgebungspaket, insbesondere für die Produktionsumgebungsverwendung, die Umgebungseinstellungen, insbesondere für die Testumgebungsverwendung, ersetzen.

4. Verfahren nach Anspruch 1, wobei die Entwicklungs- und Testumgebungen in einer gemeinsamen Domäne verwendet werden.

5. Verfahren nach Anspruch 1, wobei die Komponenten für externe Verbindungen eine Verbindung zu einem Knoten herstellen, welcher Daten speichert, welche einen Betrieb des API-Servers beeinflussen, und wobei die Komponenten für externe Verbindungen Umgebungseinstellungen umfassen, welche abgefragt werden, um einen Client des API-Servers zu authentifizieren.

6. Verfahren nach Anspruch 1, ferner umfassend:
Empfangen einer umgebungsspezifischen Eingabe; und
Aktualisieren auf Grundlage der empfangenen umgebungsspezifischen Eingabe des trennbaren Umgebungspakets, insbesondere für die Testumgebungsverwendung des API-Servers.

7. Verfahren nach Anspruch 6, ferner umfassend:
Empfangen einer zweiten umgebungsspezifischen Eingabe; und
Aktualisieren auf Grundlage der empfangenen zweiten umgebungsspezifischen Eingabe des trennbaren Umgebungspakets, insbesondere für die Testumgebungsverwendung des API-Servers.

8. Verfahren nach Anspruch 1, ferner umfassend:
Empfangen von Benutzerauswahlen von Komponenten für Richtlinien, Listener und externe Verbindungen, welche Umgebungseinstellungen, insbesondere für einen Betrieb des API-Servers bei der Entwicklungsumgebungsverwendung, sind; und
Empfangen von Eingabewerten für jede der Benutzerauswahlen, wobei die Eingabewerte sicherstellen, dass die erste Konfiguration bei der Entwicklungsumgebungsverwendung verwendbar bleibt,
wobei das Vorbereiten einer zweiten Konfiguration des API-Servers ein Exportieren des Richtlinienpakets, welches die Benutzerauswahlen und die Eingabewerte umfasst, auf einen Datenträger umfasst.

9. Verfahren nach Anspruch 8, ferner umfassend:
Erhalten der kryptographischen Zertifikate und der Benutzerauthentifizierungsparameter, wobei das Vorbereiten einer zweiten Konfiguration des API-Servers ein Exportieren des trennbaren Umgebungspakets, welches die erhaltenen kryptographischen Zertifikate und die erhaltenen Benutzerauthentifizierungsparameter umfasst, auf einen Datenträger umfasst.

10. Verfahren nach Anspruch 8, ferner umfassend:
Aktualisieren der ersten Konfiguration des API-Servers auf Grundlage der Eingabewerte;
Erhalten eines von der aktualisierten ersten Konfiguration des API-Servers abgeleiteten aktualisierten Richtlinienpakets;
Aktualisieren der zweiten Konfiguration des API-Servers, wobei das Aktualisieren der zweiten Konfiguration ein Zusammenführen des trennbaren Umgebungspakets, insbesondere für die Testumgebungsverwendung des API-Servers, mit dem aktualisierten Richtlinienpaket umfasst;
Empfangen zweiter Eingabewerte für neue Umgebungseinstellungen für das aktualisierte Richtlinienpaket; und
Aktualisieren von Eingabewerten der neuen Umgebungseinstellungen unter Verwendung der empfangenen zweiten Eingabewerte.

11. Verfahren nach Anspruch 10, wobei das Aktualisieren der zweiten Konfiguration des API-Servers ein Hinzufügen oder ein Entfernen wenigstens eines aus der Gruppe umfasst, welche Zertifikate, Schlüssel, Benutzer und Benutzergruppen umfasst.

12. Computerprogrammprodukt, welches in einem oder mehreren Medien codiert ist, wobei das Computerprogrammprodukt umfasst:
Anweisungen, welche auf einem Prozessor eines ersten rechnergestützten Systems ausführbar sind, um ein Studio für graphische Richtlinien bereitzustellen, in welchem ein Richtlinienentwicklerbenutzer (i) den Definierungsschritt (510) des Verfahrens nach Anspruch 1 zusammen mit (ii) einer Ausführung einer virtualisierten Instanz der ersten Konfiguration und (iii) einem Export der Computerlesbares-Medium-Codierung des Verwendungspakets durchführen kann;
Anweisungen, welche auf einem Prozessor eines zweiten rechnergestützten Systems ausführbar sind, um ein Konfigurationsstudio bereitzustellen, in welchem ein verwendender Benutzer (i) die Vorbereitungsschritte (520, 530) des Verfahrens nach Anspruch 1 in Bezug auf eine oder beide der zweiten und der dritten Konfiguration des API-Servers durchführen kann; und
Anweisungen, welche auf einem Prozessor eines dritten rechnergestützten Systems ausführbar sind, um den Verwendungsschritt des Verfahrens nach Anspruch 1 durchzuführen.

13. System zum Verwalten einer Folge von Verwendungen einer Anwendungsprogrammierschnittstelle, API, wobei das System umfasst:
eine erste Verwendungs-Engine, welche eine erste Konfiguration eines API-Servers definiert (510),
wobei die erste Konfiguration ein Verwendungspaket umfasst, welches wenigstens Komponenten für Richtlinien, Filter, Listener und externe Verbindungen der definierten ersten Konfiguration zusammen mit Umgebungseinstellungen, insbesondere für einen Betrieb des API-Servers bei einer Entwicklungsumgebungsverwendung davon, codiert;
eine zweite Verwendungs-Engine, welche eine zweite Konfiguration des API-Servers vorbereitet (520), durch Zerlegen der ersten Konfiguration in Abschnitte, welche umgebungsspezifisch sind, und Abschnitte, welche umgebungsunabhängig sind, so dass die erste Konfiguration an die Umgebung angepasst ist, wenn sie in einer Test- oder Produktionsumgebung vorangetrieben wird, um umgebungsneutrale Aspekte von Komponenten für Richtlinien, Filter, Listener und externe Verbindungen von umgebungsspezifischen Aspekten zu trennen, wobei die zweite Konfiguration (i) ein von den umgebungsneutralen Aspekten der ersten Konfiguration abgeleitetes Richtlinienpaket und (ii) ein trennbares Umgebungspaket, insbesondere für eine Testumgebungsverwendung des API-Servers, umfasst; und
eine dritte Verwendungs-Engine, welche eine dritte Konfiguration des API-Servers vorbereitet (530),
wobei die dritte Konfiguration (i) das abgeleitete Richtlinienpaket und (ii) ein trennbares Umgebungspaket, insbesondere für eine Produktionsumgebungsverwendung des API-Servers, umfasst;
eine vierte Verwendungs-Engine, welche wenigstens eine der Testumgebung und der Produktionsumgebung verwendet, wobei die Umgebungseinstellungen für die Entwicklungsumgebungsverwendung und die Umgebungspakete, insbesondere für die Test- und Produktionsumgebungsverwendungen des API-Servers, in Bezug auf ihre jeweiligen Verwendungsumgebungen unterschiedliche externe Resource Locators, kryptographische Zertifikate und Benutzerauthentifizierungsparameter spezifizieren.

14. System nach Anspruch 13, ferner umfassend:
eine Promotion Engine, welche unverändert die Komponenten für Richtlinien, Listener und externe Verbindungen des API-Servers von der Entwicklungsumgebungsverwendung zu den sukzessiven Test- und Produktionsumgebungsverwendungen davon vorantreibt und welche Instanzen des API-Servers für die sukzessiven Test- und Produktionsumgebungsverwendungen spezialisiert, durch Spezialisieren der Umgebungspakete, insbesondere darauf.

15. System nach Anspruch 13, wobei die vorangetriebenen Komponenten für Richtlinien, Listener und externe Verbindungen des API-Servers bei den sukzessiven Test- und Produktionsumgebungsverwendungen davon als Teil einer umgebungsunabhängigen Version des abgeleiteten Richtlinienpakets verkörpert sind.

## Revendications

1. Procédé, mis en oeuvre par ordinateur, de gestion d'une succession de déploiements d'une configuration de serveur d'interface de programmation d'application, API, le procédé comprenant les étapes ci-dessous consistant à :
définir (510) une première configuration du serveur d'interface API, la première configuration étant incorporée sous la forme d'un codage sur support lisible par ordinateur d'un paquetage de déploiement qui code au moins des composants de politique, de filtre, d'écoute et de connexion externe de la première configuration définie conjointement avec des paramétrages d'environnement propres au fonctionnement du serveur d'interface API dans un déploiement d'environnement de développement connexe ;
préparer (520) une deuxième configuration du serveur d'interface API, en décomposant la première configuration en des parties qui sont spécifiques à l'environnement, et en des parties qui sont agnostiques vis-à-vis de l'environnement, de sorte que la première configuration est implantée dans l'environnement lorsqu'elle est promue à un environnement de test ou de production, de manière à séparer des aspects neutres vis-à-vis de l'environnement des composants de politique, de filtre, d'écoute et de connexion externe, des aspects spécifiques à l'environnement, la deuxième configuration étant incorporée sous la forme de codages sur supports lisibles par ordinateur (i) d'un paquetage de politiques dérivé des aspects neutres vis-à-vis de l'environnement de la première configuration et (ii) d'un paquetage d'environnement séparable propre à un déploiement d'environnement de test du serveur d'interface API ;
préparer (530) une troisième configuration du serveur d'interface API, la troisième configuration étant incorporée sous la forme de codages sur supports lisibles par ordinateur (i) du paquetage de politiques dérivé et (ii) d'un paquetage d'environnement séparable propre à un déploiement d'environnement de production du serveur d'interface API ; et
déployer au moins l'un parmi l'environnement de test et l'environnement de production, dans lequel les paramétrages d'environnement pour le déploiement d'environnement de développement et les paquetages d'environnement propres aux déploiements d'environnement de test et d'environnement de production du serveur d'interface API spécifient, par rapport à leurs environnements de déploiement respectifs, des localisateurs de ressources externes, des certificats cryptographiques et des paramètres d'authentification d'utilisateur différents.

2. Procédé selon la revendication 1, comprenant en outre les étapes ci-dessous consistant à :
promouvoir au moins une valeur inchangée associée aux composants de politique, d'écoute et de connexion externe du serveur d'interface d'API, du déploiement d'environnement de développement aux déploiements d'environnement de test et d'environnement de production successifs connexes ; et
spécialiser des instances du serveur d'interface API pour les déploiements d'environnement de test et d'environnement de production successifs en spécialisant les paquetages d'environnement qui leur sont propres.

3. Procédé selon la revendication 1, dans lequel les paramétrages d'environnement dans le paquetage d'environnement propre au déploiement d'environnement de test remplacent les paramétrages d'environnement propres au déploiement d'environnement de développement, et dans lequel les paramétrages d'environnement dans le paquetage d'environnement propre au déploiement d'environnement de production remplacent les paramétrages d'environnement propres au déploiement d'environnement de test.

4. Procédé selon la revendication 1, dans lequel les environnements de développement et de test sont déployés dans un domaine commun.

5. Procédé selon la revendication 1, dans lequel les composants de connexion externe établissent une connexion à un noeud qui stocke des données qui affectent le fonctionnement du serveur d'interface API, et dans lequel les composants de connexion externe incluent des paramétrages d'environnement qui sont interrogés pour authentifier un dispositif client du serveur d'interface API.

6. Procédé selon la revendication 1, comprenant en outre les étapes ci-dessous consistant à :
recevoir une entrée spécifique à l'environnement ; et
mettre à jour, sur la base de l'entrée spécifique à l'environnement reçue, le paquetage d'environnement séparable propre au déploiement d'environnement de test du serveur d'interface API.

7. Procédé selon la revendication 6, comprenant en outre les étapes ci-dessous consistant à :
recevoir une seconde entrée spécifique à l'environnement ; et
mettre à jour, sur la base de la seconde entrée spécifique à l'environnement reçue, le paquetage d'environnement séparable propre au déploiement d'environnement de production du serveur d'interface API.

8. Procédé selon la revendication 1, comprenant en outre les étapes ci-dessous consistant à :
recevoir des sélections utilisateur de composants de politique, d'écoute et de connexion externe qui sont des paramétrages d'environnement propres au fonctionnement du serveur d'interface API dans le déploiement d'environnement de développement ; et
recevoir des valeurs d'entrée pour chacune des sélections utilisateur, dans lequel les valeurs d'entrée garantissent que la première configuration reste déployable dans le déploiement d'environnement de développement ;
dans lequel l'étape de préparation d'une deuxième configuration du serveur d'interface API inclut l'étape consistant à exporter le paquetage de politiques incluant les sélections utilisateur et des valeurs d'entrée, vers un disque.

9. Procédé selon la revendication 8, comprenant en outre l'étape ci-dessous consistant à :
obtenir les certificats cryptographiques et les paramètres d'authentification d'utilisateur, dans lequel l'étape de préparation d'une deuxième configuration du serveur d'interface API inclut l'étape consistant à exporter le paquetage d'environnement séparable incluant les certificats cryptographiques et paramètres d'authentification d'utilisateur obtenus, vers un disque.

10. Procédé selon la revendication 8, comprenant en outre les étapes ci-dessous consistant à :
mettre à jour la première configuration du serveur d'interface API sur la base des valeurs d'entrée ;
obtenir un paquetage de politiques mis à jour dérivé de la première configuration mise à jour du serveur d'interface API ;
mettre à jour la deuxième configuration du serveur d'interface API, dans lequel l'étape de mise à jour de la deuxième configuration inclut l'étape consistant à fusionner le paquetage d'environnement séparable propre au déploiement d'environnement de test du serveur d'interface API avec le paquetage de politiques mis à jour ;
recevoir des secondes valeurs d'entrée pour de nouveaux paramétrages d'environnement pour le paquetage de politiques mis à jour ; et
mettre à jour des valeurs d'entrée des nouveaux paramétrages d'environnement, en utilisant les secondes valeurs d'entrée reçues.

11. Procédé selon la revendication 10, dans lequel l'étape de mise à jour de la deuxième configuration du serveur d'interface API inclut l'étape consistant à ajouter ou à supprimer au moins un élément parmi le groupe incluant des certificats, des clés, des utilisateurs et des groupes d'utilisateurs.

12. Produit-programme informatique codé sur un ou plusieurs supports, le produit-programme informatique comprenant :
des instructions exécutables sur un processeur d'un premier système de calcul informatique pour fournir un studio de politiques graphiques dans lequel un utilisateur développeur de politiques peut mettre en oeuvre (i) l'étape de définition (510) du procédé selon la revendication 1, conjointement avec (ii) l'exécution d'une instance virtualisée de la première configuration et (iii) l'exportation du codage sur support lisible par ordinateur du paquetage de déploiement ;
des instructions exécutables sur un processeur d'un deuxième système de calcul informatique pour fournir un studio de configuration dans lequel un utilisateur chargé du déploiement peut mettre en oeuvre (i) les étapes de préparation (520, 530) du procédé selon la revendication 1, par rapport à l'une ou l'autre ou aux deux des deuxième et troisième configurations du serveur d'interface API ; et
des instructions exécutables sur un processeur d'un troisième système de calcul informatique pour mettre en oeuvre l'étape de déploiement du procédé selon la revendication 1.

13. Système destiné à gérer une succession de déploiements d'une interface de programmation d'application, API, le système comprenant :
un premier moteur de déploiement qui définit (510) une première configuration d'un serveur d'interface API, dans lequel la première configuration inclut un paquetage de déploiement qui code au moins des composants de politique, de filtre, d'écoute et de connexion externe de la première configuration définie conjointement avec des paramétrages d'environnement propres au fonctionnement du serveur d'interface API dans un déploiement d'environnement de développement connexe ;
un deuxième moteur de déploiement qui prépare (520) une deuxième configuration du serveur d'interface API, en décomposant la première configuration en des parties qui sont spécifiques à l'environnement, et en des parties qui sont agnostiques vis-à-vis de l'environnement, de sorte que la première configuration est implantée dans l'environnement lorsqu'elle est promue à un environnement de test ou à un environnement de production, de manière à séparer des aspects neutres vis-à-vis de l'environnement des composants de politique, de filtre, d'écoute et de connexion externe, des aspects spécifiques à l'environnement, dans lequel la deuxième configuration inclut (i) un paquetage de politiques dérivé des aspects neutres vis-à-vis de l'environnement de la première configuration et (ii) un paquetage d'environnement séparable propre à un déploiement d'environnement de test du serveur d'interface API ; et
un troisième moteur de déploiement qui prépare (530) une troisième configuration du serveur d'interface API, dans lequel la troisième configuration inclut (i) le paquetage de politiques dérivé et (ii) un paquetage d'environnement séparable propre à un déploiement d'environnement de production du serveur d'interface API ; et
un quatrième moteur de déploiement qui déploie au moins l'un parmi l'environnement de test et l'environnement de production, dans lequel les paramétrages d'environnement pour le déploiement d'environnement de développement et les paquetages d'environnement propres aux déploiements d'environnement de test et d'environnement de production du serveur d'interface API spécifient, par rapport à leurs environnements de déploiement respectifs, des localisateurs de ressources externes, des certificats cryptographiques et des paramètres d'authentification d'utilisateur différents.

14. Système selon la revendication 13, comprenant en outre :
un moteur de promotion qui promeut au moins une valeur inchangée associée aux composants de politique, d'écoute et de connexion externe du serveur d'interface d'API, du déploiement d'environnement de développement aux déploiements d'environnement de test et d'environnement de production successifs connexes, et qui spécialise des instances du serveur d'interface API pour les déploiements d'environnement de test et d'environnement de production successifs en spécialisant les paquetages d'environnement qui leur sont propres.

15. Système selon la revendication 13, dans lequel les composants de politique, d'écoute et de connexion externe promus du serveur d'interface API sont incorporés dans les déploiements d'environnement de test et d'environnement de production successifs connexes dans le cadre d'une version agnostique vis-à-vis de l'environnement du paquetage de politiques dérivé.
